# EUROPEAN PATENT SPECIFICATION

(11) **EP 4 003 636 B1**
(45) Date of publication and mention of the grant of the patent: **06.09.2023**
(21) Application number: 20744034.8
(22) Date of filing: 23.07.2020
(51) Int. Cl.: B23K 26/40, B23K 26/362

(54) **METHOD FOR THE REMOVAL OF A COATING FROM A METAL SUBSTRATE BY LASER ABLATION**
VERFAHREN ZUM ENTFERNEN EINER BESCHICHTUNG VON EINEM METALLISCHEN SUBSTRAT DURCH LASERABLATION
PROCÉDÉ D'ÉLIMINATION D'UN REVÊTEMENT D'UN SUBSTRAT MÉTALLIQUE PAR ABLATION LASER

(30) Priority: 25.07.2019 EP 19188441; 09.08.2019 EP 19191064
(43) Date of publication of application: 01.06.2022
(73) Proprietor: Tata Steel Nederland Technology B.V., 1951 JZ Velsen-Noord (NL)
(72) Inventor: MUSTAFA, Hasib, 7521 JC ENSCHEDE (NL); MATTHEWS, David Thomas Allan, 1970 CA IJMUIDEN (NL); RÖMER, Gerardus, Richardus, Bernardus, Engelina, 7041 TD 's-HERENBERG (NL); VAN DER AA, Ellen, 1970 CA IJMUIDEN (NL)
(74) Representative: Group Intellectual Property Services
(86) International application number: PCT/EP2020/070822
(87) International publication number: WO 2021/013939

(56) References cited:
- WO-A2-2011/000361
- DE-A1- 10 315 976
- GB-A- 2 274 257

## Description

### Field of the invention

The invention relates to the removal of zinc based coating from a metal substrate by means of laser ablation.

### Background of the invention

The presence of a zinc based coating on a metal substrate, more in particular a steel substrate, provides good corrosion protection of the substrate during the lifetime of the product in which the metal substrate is used. However, the presence of a zinc based coating on a steel substrate also gives rise to problems during manufacturing of steel products and also with recycling of substrate scrap material and recycling of such steel products.

In for instance the automotive industry numerous sub-parts are welded together to form a final part. With the welding of steel parts provided with a zinc based coating toxic fumes are generated, which can lead to significant health issues. Patent document GB 2274257 A discloses a method of preparing zinc coated steel for welding by controlled local removal of the zinc layer by laser radiation.

Moreover welding parts together which are covered by a zinc based coating will often result in that the strength integrity of the weld is compromised through liquid metal embrittlement. During welding tensions will occur in the substrate and part of the zinc coating will liquefy which in combination may lead to liquid metal embrittlement, that is when zinc penetrates into cracks in the substrate. This will cause a reduction of elongation to failure and early fracture in normally ductile metals or alloys.

When Zn containing coarse dust resulting from the Blast Furnace (BF) is reintroduced in the BF process by including it in sinter material for the BF or scrap metal is recycled for instance in a Basic Oxygen Furnace or in an Electric Arc Furnace the presence of (too much) zinc can lead to several separate problems:
1) health-related - the formation of zinc oxide during melting can lead to significant health issues and/or fouling of the BF;
2) product quality - trace zinc of 0.01% or more--can create porosity in the continuous cast product. As the steel solidifies, the dissolved zinc in the bath is suddenly released as zinc vapor, which tends to form gas cavities in the solid steel.

### Objectives of the invention

It is an objective of the present invention to provide a method to remove a zinc based coating from at least a part of the surface of a metal substrate provided with such coating.

It is another objective of the present invention to provide a method to remove a zinc based coating from at least a part of the surface of a metal substrate wherein the metal substrate is substantially not affected by the applied method.

It is another objective of the present invention to provide a method to remove a zinc based coating from at least a part of the surface of a metal substrate which can be applied to precisely defined areas.

It is another objective of the present invention to provide a method to remove a zinc based coating from at least a part of the surface of a metal substrate which can be applies in a cost effective manner.

### Description of the invention

The invention relates to a method as defined in the claims. One or more of the objectives of the invention are realized by providing a method for removal of a zinc-based coating from a metal substrate provided with a zinc based coating by means of laser ablation, wherein the method include the steps of:
- providing a metal substrate with a zinc-based coating,
- defining a surface area from which the zinc-based coating is to be removed,
- controlling a laser device to provide a laser beam for ablation of the zinc based coating, wherein the laser device provides a pulsed laser beam with a wavelength in a range of 680 - 1500 nm and a pulse duration in a range of 1 - 900 ps,
- determining the thickness of the zinc based coating layer,
- setting the fluence of the laser beam to a value above a threshold value for the ablation of the zinc based layer and determining the number of pulses per laser spot area required for the ablation of the zinc based coating over the complete thickness thereof,
- positioning and moving the laser device and the metal substrate relative to each other, and removing the zinc based coating from the metal substrate over the defined surface area.

A steel substrate with a zinc based coating consists of a zinc based coating layer, an intermediate layer between the zinc based coating layer and the steel substrate and the steel substrate itself. A zinc based coating includes a pure zinc or almost pure zinc coating (GI), zinc-iron alloy (GA) coating with 8-12 wt % Fe, zinc-aluminium alloy coating with about 5 wt% Al (Galfan), zinc-aluminium-magnesium alloy coating with 5 wt% Al or less and 5 wt% Mg or less.

It was found that the maximum depth of the ablation craters for a wavelength in a range of 680 - 1500 nm saturates at a given depth which is at the interface between the zinc based coating and steel substrate. For wavelengths below the lower limit of 680 nm there is no saturation along said interface and ablation of the substrate will occur depending on chosen fluence, number of pulses and pulse duration. The fluence of the laser beam must at least be above the threshold value because otherwise no ablation will occur at all. It was found that for these zinc based coatings the threshold value is in the order of 0.2 J/cm².

According to a further embodiment of the invention the wavelength is in a range of 750 - 1300 nm. Typically the wavelength is in a range of 1020 - 1064 nm. It appeared that with the wavelength in these narrower ranges the saturation of the ablation at the interface between the zinc based coating and steel substrate interface can be realised more accurately.
According to a further embodiment of the invention the pulse duration in a range of 3 - 100 ps. Due to the short pulse duration the local interaction zone of the laser beam and the substrate and coating can be controlled from a single atomic layer to hundreds of nanometers by adjusting the laser processing parameters such as pulse duration, energy and inter-pulse delay, as well as the radius and intensity profile of the laser beam. Increasing pulse duration typically results in higher pulse energy. For a given laser spot radius, the fluence of longer pulses (in terms of duration) will be higher than that of shorter pulses, because the pulse energy is higher. If inter-pulse delay is decreased, or pulse frequency is increased, heat generation will be higher for longer pulses with relatively high fluence than that of shorter laser pulses. Typically the pulse duration is in a range of 5 - 30 ps.

The energy efficiency of ultrashort pulsed laser processing increases when processing with a peak power close to the ablation threshold energy of a given material. To create meso and micro-scale structures and/or textures in an energy efficient way the processing parameters should combine both low fluence (energy per unit area) and multiple number of laser pulses on the same spot. According to a further embodiment the number of pulses are kept within a range of 1-100 pulses. Typically the number of pulses is in a range of 5-50 pulses.

According to a further embodiment the pulse repetition rate is in a range from 1 Hz- 1MHz. Although even higher frequencies are possible there is a limit when looking at energy efficiency and the possible generation of heat. Typically the pulse repetition rate is in a range from 1 Hz-400 kHz. The method was applied successfully with a pulse repetition rate in a range of 40Hz - 10kHz.

According to a further embodiment the fluence of the laser beam is in a range of 0.1 - 100 J/cm².

If the defined surface area is part of the total surface area of the metal substrate from which the zinc based coating should be removed and is relatively limited, such as with the removal of the coating for welding purposes, a laser device with a single laser beam will be sufficient. However, with larger areas, for instance if the coating from the total surface area of a piece of scrap or a formed part should be removed, it is provided that more than one laser beam is used for the ablation of the zinc based coating from the metal substrate over the defined area.

According to a further embodiment it is provided that the positioning and moving of the laser device and the metal substrate relative to each other comprises moving the laser device in a direction at an angle to the metal substrate and moving the metal substrate in a plane at an angle to the laser beam. The angle between laser beam and substrate is typically a 90° angle but deviations within a range of 10° or even 20° or more do not really hamper the ablation method.

According to a further embodiment it is provided that the positioning and moving of the laser device and the metal substrate relative to each other, wherein the metal substrate has a shape other than a flat shape, comprises the use of a three-axis stage for the movement and positioning of the laser device and the use of a multiple axis system with 6 degrees of freedom for the movement and positioning of the metal substrate.

In both of the above setups the movement of the laser device and the substrate could also be the other way round. However, because of the more complicated character of the laser device with optical fibres, the movement thereof is preferably kept to minimal and simple movements.

### Brief description of the drawings

The invention will be further explained on hand of the drawing, in which:
- Fig.1: shows ablated depth as a function of laser peak fluence for different number of pulses at a laser wavelength of 1030 nm,
- Fig.2: shows the average ablation rate of galvanized steel in air for three different wavelengths as a function of peak laser fluence,
- Fig.3: shows wavelength dependent cross-sections of ablated craters.
- Fig.4: shows a set up for a handling device for flat substrates and a laser device, and
- Fig.5: shows a set up for a handling device for non-flat substrates and a laser device.

### Detailed description of the drawings

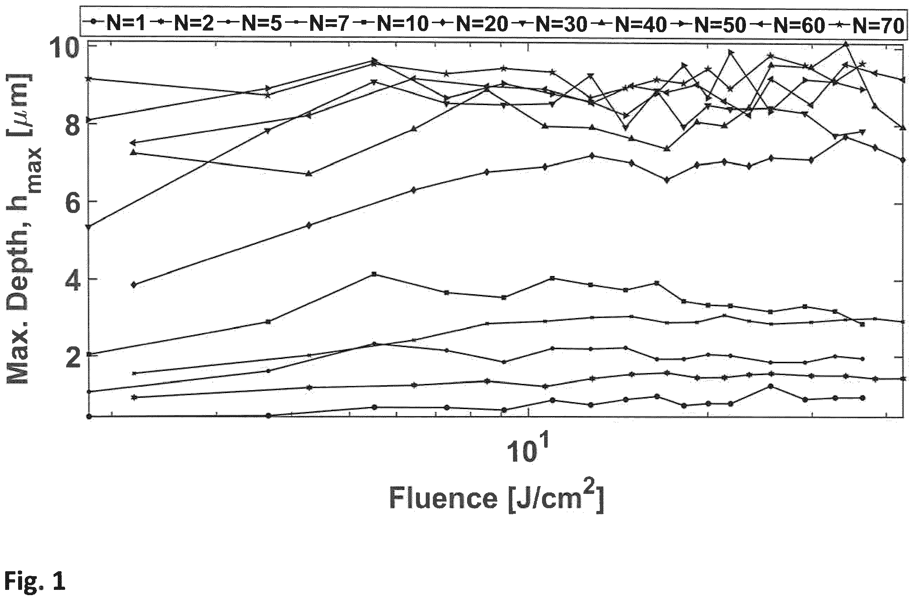

Fig.1 shows the ablated depth as a function of laser peak fluence for different number of pulses at a laser wavelength of 1030 nm. A coating layer has a varying thickness due to the roughness of the substrate as well as the roughness of the coating. In this experiment the mean thickness of the coating is about 8 µm, which in practice will mean that due to the morphology of substrate and coating the minimum coating layer thickness is about 4 µm and the maximum thickness may be over 8 µm at some places. Between a Zn based coating layer and the substrate there is a Zn-rich intermediate layer extending up to the coating-substrate interface.

Apart from surface roughness of the coating and the substrate, there is also a thin layer of oxides on the surface as well as an interfacial layer at the coating-substrate interface. Absorption of the incoming laser beam energy by the coating surface is affected by such surface defects.

The results shown in fig.1, fig.2 and fig.3 are based on test carried out on a GI coating with 99.7 wt% Zn and 0.3 wt% Al.

From the figure it appears that the lines representing the number of pulses with a wavelength of 1030 nm run more or less parallel to the fluence axis. In the figure this applies in particular for fluence values of more than about 5 J/cm2. This means that as long as the fluence is above a certain fluence threshold value for the ablation of the zinc based coating it does not matter if the fluence is further increased. The determining factor is then the number of pulses used for the ablation of the coating, the depth of ablation increases with the number of pulses.

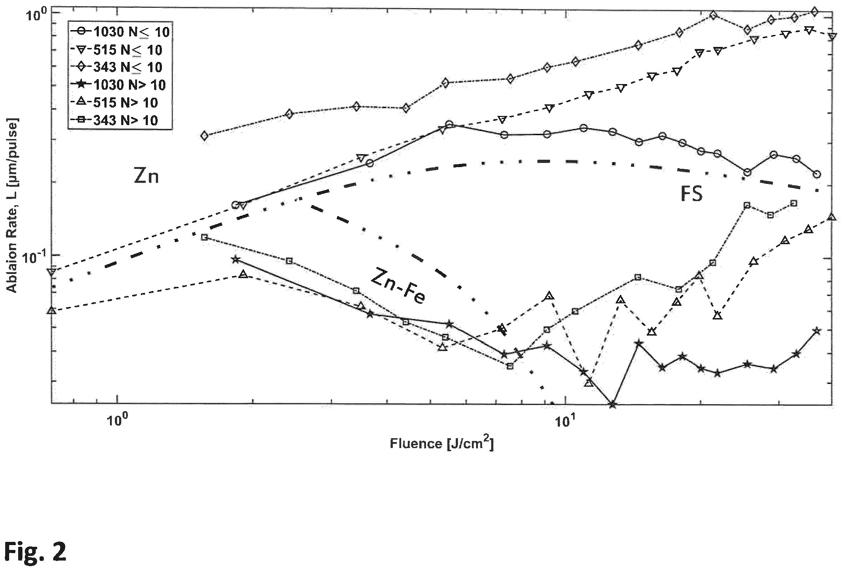

Fig.2 shows the average ablation rate of galvanized steel in air for three different wavelengths as a function of peak laser fluence. The ablation rate L is plotted against the peak fluence for N ≤ 10 and N ≥ 20 at three different wavelengths, respectively 1030 nm, 515 nm and 343 nm represented by the different lines in the figure. Fig. 2 is divided into three parts, where the upper part corresponds to direct ablation of Zn, the lower left part corresponds to the induced ablation of Zn and the lower right part corresponds to forming steel (FS) ablation. The ablation rate for N ≤ 10 is different than the ablation rate for N ≥ 20. At all wavelengths, the ablation rate for N ≤ 10 (see Fig. 2 upper part) follows Eq. (2) with an energy penetration depth of 0.1 µm ± 0.06 µm, 0.22 µm ± 0.04 µm and 0.25 µm ± 0.06 µm for 1030, 515 and 343 nm respectively. However, ablation rate for 1030 nm saturates around 0.3 µm/pulse for a fluence of > 5 J/cm2 in contrast to the other wavelengths. In the lower-left part of Fig. 2 (N ≥ 20), the ablation rate decreases exponentially up to a fluence ≤ 10J/cm2 for all three wavelengths. Ablated depth per pulse decelerates towards saturation because the substrate steel increasingly becomes the exposed surface for the incoming laser pulses. As the peak fluence value exceeds 10 J/cm2, the ablation rate stays almost constant for 1030 nm, while it increases linearly for 515 and 343 nm.
This indicates that the absorbed part of the laser beam energy contributes more towards ablating laterally, rather than vertically, along the beam propagation axis, as the steel substrate becomes more exposed towards the incoming laser beam. Therefore, the shape of the crater as well as the ablated volume should also experience similar trend change at the coating-substrate interface.

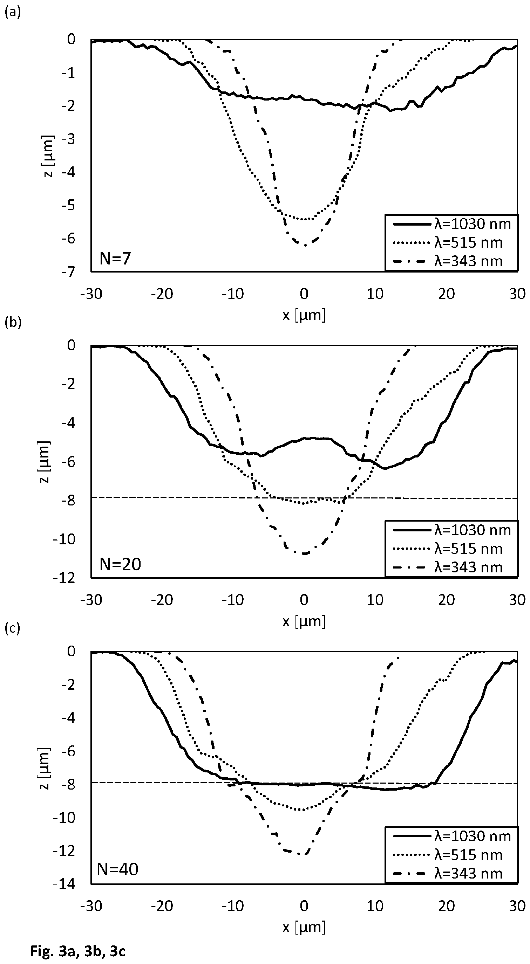

Fig.3 shows wavelength dependent cross-sections of ablated craters obtained from Confocal Laser Scanning Microscopy measurements. The cross-sections of the ablated craters further illustrate the wavelength effect on laser ablation of galvanized steel. In Fig. 3 the evolution in the crater shape for a given fluence (21 J/cm2) is shown for three different number of pulses corresponding to ablation in a pure Zn layer, intermediate layer and steel substrate.

The crater shapes are Gaussian when ablation is confined within the pure Zn layer as shown in Fig. 3(a). Although 1030 nm shows more "basin"-like crater formation at F0 = 21 J/cm2, the Gaussian shaped craters are only observed for F0 < 10 J/cm2, The ablation rate is significantly higher for 343 nm and 515 nm if F0 > 10 J/cm2. This observation is reflected in Fig. 3(a), where the craters extend in the intermediate layer for 343 and 515 nm, while craters at 1030 nm stay within the Zn layer.

If the number of pulses is increased further, the difference between the craters processed at different laser wavelength becomes more pronounced as shown in Fig. 3(b) for N = 20. Craters at 1030 nm maintain their basin-like shape with a hump at the center of the crater. For 515 nm, the crater shows slight saturation along the coating-substrate interface indicated by the dotted horizontal line in Fig. 3(b). Craters processed at 343 nm appear to be unaffected by the change of ablating material at the coating-substrate interface and maintain their Gaussian shapes.

For an even higher number of pulses (N = 40), the craters deepen further within the material. As shown in Fig. 3(c), the ablation behaviour of forming steel at different laser wavelength is revealed when the depth of the craters exceeds the coating layer thickness. As seen for lower number of pulses, craters processed at 1030 nm maintain their basin-like shape, but this time, along the coating-substrate interface. Both 515 and 343 nm drill through the substrate steel with the latter having higher rate of ablation than the former.

From these analyses, it can be concluded that hot dipped galvanized steel is very sensitive to the chosen laser wavelength. For removing the zinc based coating layer from a coated steel surface without affecting the substrate a wavelength in a range around 1030 nm appears to be very suitable. The maximum depth of the ablated crater using a wavelength in this range is found to saturate along coating-substrate interface with the craters becoming more cylindrical in shape.

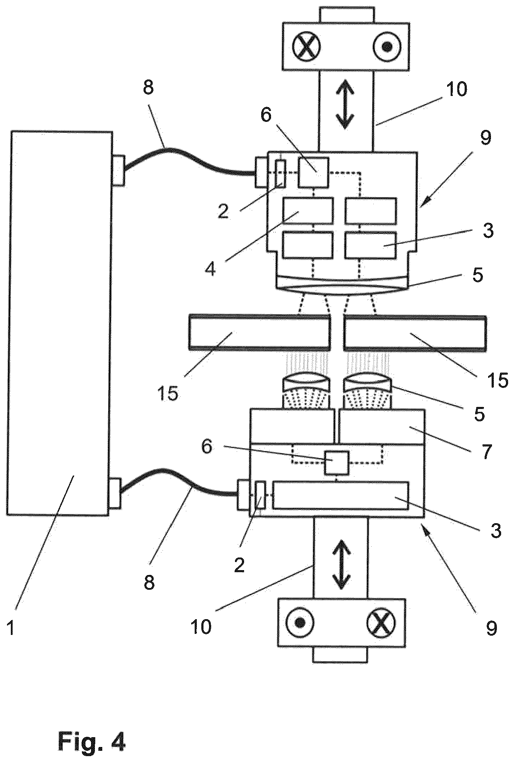

Fig.4 shows a setup for a handling device for flat substrates and a laser device 1, with two different embodiments shown above and below the sample 15. The sample 15 is provided with a zinc based coating on both sides. In both cases, a laser beam guided through a fibre 8 is attached with a laser head 9. The laser head 9 is mounted on a linear axis 10 to help maintain the focus of the laser beam on the sample, in the figure shown as a vertical axis. This whole laser head 9 setup is mounted on a horizontal stage (not shown in the figure), e.g. X,Y linear stage, conveyer belt etc., for moving parallel to the sample surface to process large surface areas. As an alternative the sample 15 could be mounted on a X,Y stage and the laser head 9 only on a Z-stage. Assist gasses may be used for reducing oxidation and increase productivity, if the processing is for coating removal prior to laser welding. Or alternatively a liquid layer may be used to capture ablated particles for recycling of galvanized steel.

In the upper set-up, the incoming laser pulse energy is controlled via a power modulator 2, followed by beam splitting unit 6 to split the incoming laser beam into multiple laser beams. Each of these multiple beams can be shaped into desired intensity profile (e.g. top-hat, square) by applying a beam shaping unit 4. The beam expanding unit 3 expands or reduces the beam size before focusing through a f-theta lens 5.

In the lower setup, the laser beam is attenuated in the similar manner like the upper setup, expanded/reduced using a beam expanding unit 3, split into multiple beams. These two beams then passed through beam deflection unit 7 (e.g. galvoscanner, polygon-wheel mirror) and focused using f-theta lens 5.

In the drawing the following items are depicted:
- Laser Device (1), which is a picosecond laser source with a near infra-red wavelength;
- Power modulator (2) which modulates the pulse energy of the laser beam and typically consists of half lambda plate and a polarizing beam splitter;
- Beam Expander (3) with beam expanding elements that can either be prismatic (e.g. multiple-prism beam expander), or telescopic (e.g. Galilean refractive beam expander). It is also possible to use variable magnification beam expanders as well as reflective beam expanders to serve the purpose;
- Beam Shaper (4), typically realized through Diffractive Optical Element (DOE), Refractive Optical Element (ROE), Spatial Light Modulator, Tunable MEMS-based Optical Linear (1D) Diffuser, or a diode bar in conjunction with laser diode to optimize the laser intensity or fluence profile;
- F-theta lens (5) The focusing of the laser beam can be achieved either by single optical element, or array of multiple elements. These optical elements are typically transmissive (e.g. lens), but can also be reflective (e.g. mirrors);
- Beam Splitting Unit (6) which uses basic optical elements to implement either Direct Laser Interference Patterning (DLIP), or Multi Beam Splitter (MBS), and
- Beam Deflection Unit (7), typically mirror based mechanical deflectors including galvo scanners, polygon scanners, resonant piezo scanners, MEMS scanners, or optical solid state deflectors like Electro-optical Deflectors (EOD) and Acousto-optical Deflectors (AOD).

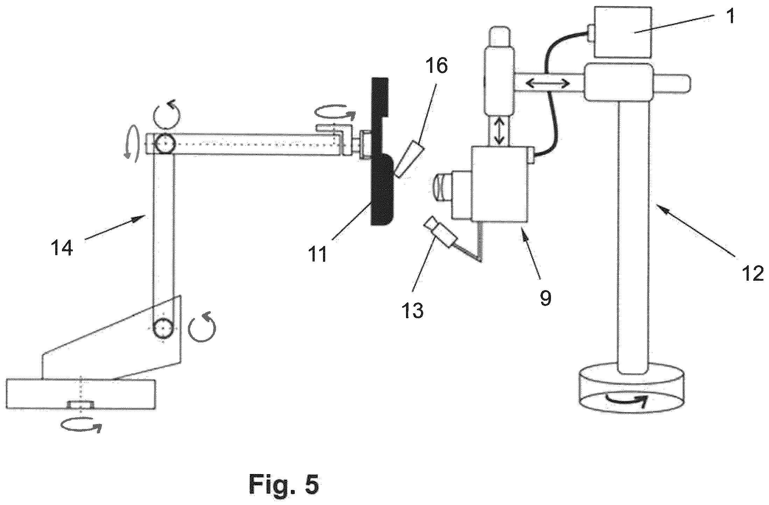

Fig.5 shows a set up for a handling device for non-flat substrates 11 and a laser device 1. In the figure the substrate 11 from which a part of the coating or the complete coating is to be removed is a curved, more complex-shaped sample. The shown example is a car door 11 from which typically only part of the coating has to be removed for welding purposes. But the setup can also be used for the complete removal of the coating from a non-flat substrate.

In this setup, the laser head 9 is mounted on a 3 axis stage 12 with a process visualization unit 13 (e.g. camera). The sample 11 is mounted on a 6 degrees of freedom robot 14 so that the desired processing area is always under the line of sight of laser beam. Ablated particles and debris are collected via an exhaust unit 16.

The laser beam is typically directed at an angle of 90°to the substrate. However, deviations in a range of 0 - 10° to a direction perpendicular to the surface of the metal substrate provided with a zinc based coating will not hamper the laser ablation method.

## Claims

1. Method for removal of a zinc-based coating from a metal substrate provided with a zinc based coating by means of laser ablation, wherein the method include the steps of:
- providing a metal substrate with a zinc-based coating,
- defining a surface area from which the zinc-based coating is to be removed,
- controlling a laser device (1) to provide a laser beam for ablation of the zinc based coating, wherein the laser device (1) provides a pulsed laser beam with a wavelength in a range of 680 - 1500 nm and a pulse duration in a range of 1 - 900 ps,
- determining the thickness of the zinc based coating layer,
- setting the fluence of the laser beam to a value above a threshold value for the ablation of the zinc based layer and determining the number of pulses per laser spot area required for the ablation of the zinc based coating over the complete thickness thereof,
- positioning and moving the laser device (1) and the metal substrate relative to each other, and removing the zinc based coating from the metal substrate over the defined surface area.

2. Method according to claim 1, wherein the wavelength is in a range of 750 - 1300 nm.

3. Method according to claim 1 or 2, wherein the pulse duration in a range of 3 - 100 ps.

4. Method according to any of the preceding claims, wherein the wavelength is in a range of 1020 - 1064 nm.

5. Method according to any of the preceding claims, wherein the pulse duration in a range of 5 - 30 ps.

6. Method according to any of the preceding claims, wherein the number of pulses is in a range of 1-100 pulses, preferably in the range of 5 - 50 pulses.

7. Method according to any of the preceding claims, wherein the pulse repetition rate is in a range from 1 Hz- 1 MHz.

8. Method according to any of the preceding claims, wherein the pulse repetition rate is in a range from 1 Hz - 400 kHz.

9. Method according to any of the preceding claims, wherein the fluence is in a range of 0.1 - 100 J/cm².

10. Method according to any of the preceding claims, wherein more than one laser beam is used for the ablation of the zinc based coating from the metal substrate over the defined area.

11. Method according to any of the preceding claims, wherein the defined surface area is a part of the total surface area of the metal substrate.

12. Method according to any of the preceding claims, wherein positioning and moving the laser device (1) and the metal substrate relative to each other comprises moving the laser device (1) in a direction at an angle to the metal substrate and moving the metal substrate in a plane at said angle with the laser beam.

13. Method according to any of the preceding claims, wherein positioning and moving the laser device (1) and the metal substrate relative to each other, wherein the metal substrate has a shape other than a flat shape, comprises the use of a three-axis stage (12) for the movement and positioning of the laser device (1) and the use of a multiple axis system with 6 degrees of freedom for the movement and positioning of the metal substrate.

14. Method according to claim 12 or 13, wherein the laser beam is directed in a range of 0 -10° to a direction perpendicular to the surface of the metal substrate provided with a zinc based coating.

15. Method according to any of the preceding claims, wherein the metal substrate is a steel substrate.

## Patentansprüche

1. Verfahren zum Entfernen einer Beschichtung auf Zinkbasis von einem metallischen Substrat, das mit einer Beschichtung auf Zinkbasis versehen ist, mittels Laserablation, wobei das Verfahren die folgenden Schritte enthält:
- Bereitstellen eines metallischen Substrats mit einer Beschichtung auf Zinkbasis,
- Definieren eines Oberflächenbereichs, von dem die Beschichtung auf Zinkbasis zu entfernen ist,
- Steuern einer Laservorrichtung (1), um einen Laserstrahl zur Ablation der Beschichtung auf Zinkbasis bereitzustellen, wobei die Laservorrichtung (1) einen gepulsten Laserstrahl mit einer Wellenlänge in einem Bereich von 680 - 1500 nm und einer Pulsdauer in einem Bereich von 1 - 900 ps bereitstellt,
- Bestimmen der Dicke der Schicht der Beschichtung auf Zinkbasis,
- Einstellen der Fluenz des Laserstrahls auf einen Wert oberhalb eines Schwellenwerts für die Ablation der Schicht auf Zinkbasis und Bestimmen der Anzahl von Pulsen pro Laserpunktbereich, die zur Ablation der Beschichtung auf Zinkbasis über deren gesamte Dicke erforderlich ist,
- Positionieren und Bewegen der Laservorrichtung (1) und des metallischen Substrats relativ zueinander und Entfernen der Beschichtung auf Zinkbasis von dem metallischen Substrat über dem definierten Oberflächenbereich.

2. Verfahren nach Anspruch 1, wobei die Wellenlänge in einem Bereich von 750 - 1300 nm liegt.

3. Verfahren nach Anspruch 1 oder 2, wobei die Pulsdauer in einem Bereich von 3 - 100 ps liegt.

4. Verfahren nach einem der vorhergehenden Ansprüche, wobei die Wellenlänge in einem Bereich von 1020 - 1064 nm liegt.

5. Verfahren nach einem der vorhergehenden Ansprüche, wobei die Pulsdauer in einem Bereich von 5 - 30 ps liegt.

6. Verfahren nach einem der vorhergehenden Ansprüche, wobei die Anzahl von Pulsen in einem Bereich von 1 - 100 Pulsen liegt, vorzugsweise in einem Bereich von 5 - 50 Pulsen.

7. Verfahren nach einem der vorhergehenden Ansprüche, wobei die Pulswiederholrate in einem Bereich von 1 Hz - 1 MHz liegt.

8. Verfahren nach einem der vorhergehenden Ansprüche, wobei die Pulswiederholrate in einem Bereich von 1 Hz - 400 kHz liegt.

9. Verfahren nach einem der vorhergehenden Ansprüche, wobei die Fluenz in einem Bereich von 0,1 - 100 J/cm² liegt.

10. Verfahren nach einem der vorhergehenden Ansprüche, wobei mehr als ein Laserstrahl für die Ablation der Beschichtung auf Zinkbasis von dem metallischen Substrat über dem definierten Bereich verwendet wird.

11. Verfahren nach einem der vorhergehenden Ansprüche, wobei der definierte Oberflächenbereich ein Teil des Gesamtoberflächenbereichs des metallischen Substrats ist.

12. Verfahren nach einem der vorhergehenden Ansprüche, wobei das Positionieren und Bewegen der Laservorrichtung (1) und des metallischen Substrats relativ zueinander ein Bewegen der Laservorrichtung (1) in einer Richtung unter einem Winkel zu dem metallischen Substrat und ein Bewegen des metallischen Substrats in einer Ebene unter dem Winkel mit dem Laserstrahl umfasst.

13. Verfahren nach einem der vorhergehenden Ansprüche, wobei das Positionieren und Bewegen der Laservorrichtung (1) und des metallischen Substrats relativ zueinander, wobei das metallische Substrat eine andere Form als eine flache Form aufweist, die Verwendung eines dreiachsigen Gestells (12) für die Bewegung und Positionierung der Laservorrichtung (1) und die Verwendung eines Mehrachsensystems mit 6 Freiheitsgraden für die Bewegung und Positionierung des metallischen Substrats umfasst.

14. Verfahren nach Anspruch 12 oder 13, wobei der Laserstrahl in einem Bereich von 0 - 10° zu einer Richtung senkrecht zu der Oberfläche des metallischen Substrats, das mit einer Beschichtung auf Zinkbasis versehen ist, gerichtet ist.

15. Verfahren nach einem der vorhergehenden Ansprüche, wobei das metallische Substrat ein Stahlsubstrat ist.

## Revendications

1. Procédé pour l'élimination d'un revêtement à base de zinc d'un substrat métallique pourvu d'un revêtement à base de zinc au moyen d'une ablation laser, le procédé comprenant les étapes de :
- fourniture d'un substrat métallique avec un revêtement à base de zinc,
- définition d'une zone de surface de laquelle le revêtement à base de zinc doit être éliminé,
- commande d'un dispositif laser (1) pour fournir un faisceau laser destiné à l'ablation du revêtement à base de zinc, le dispositif laser (1) fournissant un faisceau laser pulsé avec une longueur d'onde comprise dans une plage de 680 à 1500 nm et une durée d'impulsion dans une plage de 1 à 900 ps,
- détermination de l'épaisseur de la couche de revêtement à base de zinc,
- réglage de la fluence du faisceau laser à une valeur supérieure à une valeur seuil pour l'ablation de la couche à base de zinc et détermination du nombre d'impulsions par zone de point laser nécessaire à l'ablation du revêtement à base de zinc sur toute son épaisseur,
- positionnement et déplacement du dispositif laser (1) et du substrat métallique l'un par rapport à l'autre, et élimination du revêtement à base de zinc du substrat métallique sur la zone de surface définie.

2. Procédé selon la revendication 1, la longueur d'onde étant comprise dans une plage de 750 à 1300 nm.

3. Procédé selon la revendication 1 ou 2, la durée d'impulsion étant comprise dans une plage de 3 à 100 ps.

4. Procédé selon l'une quelconque des revendications précédentes, la longueur d'onde étant comprise dans une plage de 1020 à 1064 nm.

5. Procédé selon l'une quelconque des revendications précédentes, la durée d'impulsion étant comprise dans une plage de 5 à 30 ps.

6. Procédé selon l'une quelconque des revendications précédentes, le nombre d'impulsions étant compris dans une plage de 1 à 100 impulsions, de préférence dans la plage de 5 à 50 impulsions.

7. Procédé selon l'une quelconque des revendications précédentes, le taux de répétition des impulsions étant comprise dans une plage de 1 Hz à 1 MHz.

8. Procédé selon l'une quelconque des revendications précédentes, le taux de répétition des impulsions étant compris dans une plage de 1 Hz à 400 kHz.

9. Procédé selon l'une quelconque des revendications précédentes, la fluence étant comprise dans une plage de 0,1 à 100 J/cm².

10. Procédé selon l'une quelconque des revendications précédentes, plus d'un faisceau laser étant utilisé pour l'ablation du revêtement à base de zinc du substrat métallique sur la zone définie.

11. Procédé selon l'une quelconque des revendications précédentes, la zone de surface définie étant une partie de la zone de surface totale du substrat métallique.

12. Procédé selon l'une quelconque des revendications précédentes, dans lequel le positionnement et le déplacement du dispositif laser (1) et du substrat métallique l'un par rapport à l'autre comprend le déplacement du dispositif laser (1) dans une direction formant un angle avec le substrat métallique et le déplacement du substrat métallique dans un plan audit angle avec le faisceau laser.

13. Procédé selon l'une quelconque des revendications précédentes, dans lequel le positionnement et le déplacement du dispositif laser (1) et du substrat métallique l'un par rapport à l'autre, le substrat métallique possédant une forme autre qu'une forme plate, comprenant l'utilisation d'un étage à trois axes (12) pour le déplacement et le positionnement du dispositif laser (1) et l'utilisation d'un système à multiples axes permettant 6 degrés de liberté pour le déplacement et le positionnement du substrat métallique.

14. Procédé selon la revendication 12 ou 13, le faisceau laser étant dirigé dans une plage de 0 à 10° par rapport à une direction perpendiculaire à la surface du substrat métallique pourvu d'un revêtement à base de zinc.

15. Procédé selon l'une quelconque des revendications précédentes, dit substrat métallique étant un substrat en acier.
